(19) Europäisches Patentamt
European Patent Office
Office européen des brevets

(11) **EP 4 206 023 A1**

(12) **EUROPEAN PATENT APPLICATION**

(43) Date of publication:
**05.07.2023  Bulletin 2023/27**

(21) Application number: **22214441.2**

(22) Date of filing: **19.12.2022**

(51) International Patent Classification (IPC):
**B60L 15/02** (2006.01)    **B60L 50/51** (2019.01)
**B60L 53/24** (2019.01)

(52) Cooperative Patent Classification (CPC):
**B60L 15/025; B60L 50/51; B60L 53/24;**
Y02T 10/70; Y02T 10/7072; Y02T 10/72;
Y02T 90/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021  CN 202111624885**

(71) Applicant: **Huawei Digital Power Technologies Co., Ltd.**
**Shenzhen, 518043 (CN)**

(72) Inventors:
• SHI, Chaojie
  Shenzhen, 518043 (CN)
• LUO, Xian
  Shenzhen, 518043 (CN)
• WU, Chaoqiang
  Shenzhen, 518043 (CN)

(74) Representative: **Goddar, Heinz J.**
**Boehmert & Boehmert**
**Anwaltspartnerschaft mbB**
**Pettenkoferstrasse 22**
**80336 München (DE)**

(54) **MOTOR LOCKED-ROTOR TORQUE CONTROL METHOD AND LOCKED-ROTOR TORQUE CONTROL APPARATUS, AND ELECTRIC VEHICLE**

(57)    This application provides a motor locked-rotor torque control method, a motor locked-rotor torque control apparatus, and an electric vehicle. The motor includes a first phase stator winding, a second phase stator winding, and a third phase stator winding, and when the motor is in a charging mode, the first phase stator winding and the second phase stator winding are connected in parallel, and then are connected to the third phase stator winding. The method includes: obtaining a current rotor magnetic field angle of the motor when the motor is in the charging mode; determining a target stator magnetic field angle of the motor based on the current rotor magnetic field angle and a preset mapping relationship between a stator and rotor magnetic field included angle and a locked-rotor torque; and further, controlling a first phase current of the first phase stator winding and a second phase current of the second phase stator winding, so that a stator magnetic field angle of the motor is the target stator magnetic field angle. According to this application, it can be ensured that the stator magnetic field angle of the motor is minimized when the motor is in the charging mode, so that safety during charging is improved and applicability is strong.

FIG. 2

## Description

### TECHNICAL FIELD

This application relates to the field of electric vehicle technologies, and in particular, to a motor locked-rotor torque control method and locked-rotor torque control apparatus, and an electric vehicle.

### BACKGROUND

With development of electric vehicle technologies, a form of an electric drive assembly (for example, a motor controller + a motor) may be gradually divided into a high-voltage platform and a low-voltage platform. The high-voltage platform can make the motor be not field weakening or less field weakening in a relatively wide speed range, so as to improve efficiency of the electric drive assembly. Therefore, an application of an electric vehicle based on the high-voltage platform is more extensive. However, most current charging piles are low-voltage charging piles below 500 V Therefore, an electric vehicle based on the high-voltage platform cannot be directly charged by using a low-voltage charging pile.

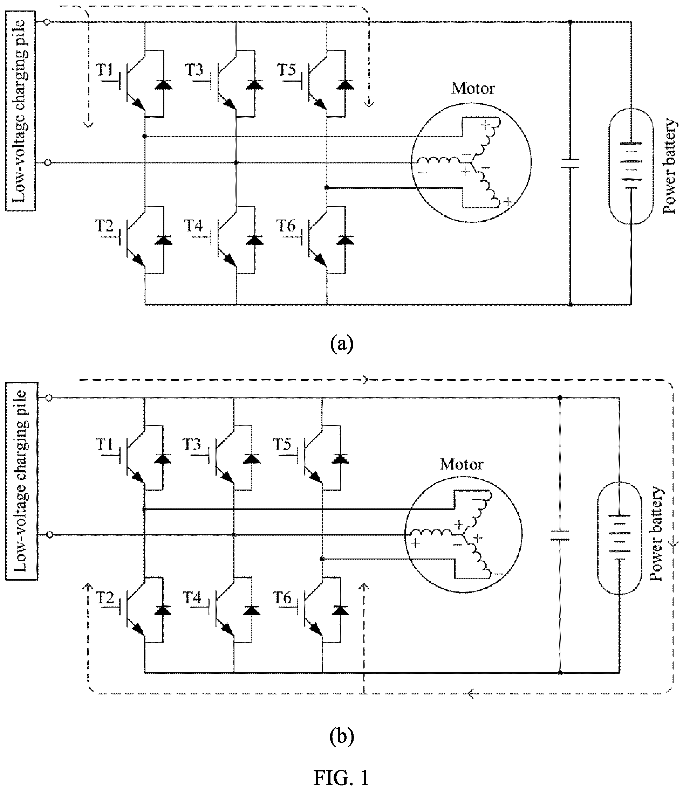

For this problem, the conventional technology provides a solution in which an electric drive assembly is reused as a boost loop, and a low voltage output by a low-voltage charging pile is boosted to a high voltage, so as to charge an electric vehicle based on a high-voltage platform. With reference to a schematic diagram of a structure of a boost circuit in which a motor winding is reused as an inductor in a wiring manner of a three-phase three-wire system shown in FIG. 1, the following describes a solution in which the electric drive assembly is reused as a boost loop. As shown in (a) in FIG. 1, when an electric vehicle is being charged, semiconductor switches T1 and T5 are first controlled to be turned on. In this case, all three-phase stator windings are in an energy storage state. A current in a low-voltage charging pile charges the three-phase stator windings in a motor by using T1 and T5. Then, as shown in (b) in FIG. 1, T1 and T5 are controlled to be turned off, and semiconductor switches T2 and T6 are turned on. In this case, the three-phase stator windings are in a discharge state, and the low-voltage charging pile and the three-phase stator windings simultaneously output electric energy to a power battery in the electric vehicle, thereby implementing high-voltage charging to the power battery.

However, in the foregoing charging solution, a motor locked-rotor torque (that is, a torque that still exists when a motor rotor does not rotate) changes with a position of the rotor, thereby affecting a vehicle braking system to a different extent. For example, when the rotor is at a specific position, the locked-rotor torque is relatively large, and the vehicle braking system temporarily fails when the charging pile starts charging the electric vehicle, resulting in low safety during charging and poor applicability.

### SUMMARY

This application provides a motor locked-rotor torque control method and locked-rotor torque control apparatus, and an electric vehicle, which can ensure that a motor locked-rotor torque is minimum when a motor is in a charging mode, so that safety during charging is improved and applicability is strong.

According to a first aspect, this application provides a motor locked-rotor torque control method, where a motor includes a first phase stator winding, a second phase stator winding, and a third phase stator winding. When the motor is in a charging mode, the first phase stator winding and the second phase stator winding are connected in parallel, and then are connected to the third phase stator winding. The method includes: obtaining a current rotor magnetic field angle of the motor when the motor is in the charging mode; determining a target stator magnetic field angle of the motor based on the current rotor magnetic field angle and a preset mapping relationship between a stator and rotor magnetic field included angle and a locked-rotor torque; and further, controlling a first phase current of the first phase stator winding and a second phase current of the second phase stator winding, so that a stator magnetic field angle of the motor is the target stator magnetic field angle. It may be understood that, when the motor is in the charging mode, the stator magnetic field angle of the motor may be adjusted to minimize a motor locked-rotor torque, thereby reducing impact on a braking system of an electric vehicle, so that safety during charging is improved and applicability is strong.

With reference to the first aspect, in a first possible implementation, an adjustable stator and rotor magnetic field included angle range may be determined based on the current rotor magnetic field angle and an adjustable stator magnetic field angle range of the motor; an adjustable locked-rotor torque range corresponding to the adjustable stator and rotor magnetic field included angle range is determined based on the preset mapping relationship between a stator and rotor magnetic field included angle and a locked-rotor torque, and a stator and rotor magnetic field included angle corresponding to a minimum locked-rotor torque in the adjustable locked-rotor torque range is determined as a target stator and rotor magnetic field included angle; and further, the target stator magnetic field angle of the motor is determined based on the target stator and rotor magnetic field included angle and the current rotor magnetic field angle. It may be understood that, regardless of a value of the current rotor magnetic field angle, the target stator magnetic field angle can be determined by using an implementation in this embodiment, which has strong applicability.

With reference to the first aspect, in a second possible implementation, a first stator and rotor magnetic field included angle between a maximum stator magnetic field angle in the adjustable stator magnetic field angle range of the motor and the current rotor magnetic field angle, and a second stator and rotor magnetic field angle between a minimum stator magnetic field angle and the current rotor magnetic field angle are determined; a first locked-rotor torque corresponding to the first stator and rotor magnetic field included angle and a second locked-rotor torque corresponding to the second stator and rotor magnetic field included angle are determined based on the preset mapping relationship between a stator and rotor magnetic field included angle and a locked-rotor torque; and further, a stator magnetic field angle corresponding to a smaller value in the first locked-rotor torque and the second locked-rotor torque is determined as the target stator magnetic field angle. It may be understood that, compared with a manner in which the adjustable stator and rotor magnetic field included angle range needs to be calculated in the first possible implementation, in this implementation, only stator and rotor magnetic field included angles between both the maximum stator magnetic field angle and the minimum stator magnetic field angle in the adjustable stator magnetic field angle range of the motor and the current rotor magnetic field angle need to be calculated, thereby effectively reducing a calculation amount in a process of determining the target stator magnetic field angle, and improving processing efficiency.

With reference to the first aspect, in a third possible implementation, the target stator magnetic field angle of the motor is determined as the current rotor magnetic field angle. It may be understood that, when the current rotor magnetic field angle is within the adjustable stator magnetic field angle range of the motor, it may be ensured that the stator and rotor magnetic field included angle is a 0° electrical angle in a manner in which the stator magnetic field angle of the motor is consistent with the current rotor magnetic field angle, thereby ensuring that the locked-rotor torque of the motor is 0 N·m, and ensuring that a braking system of an electric vehicle is not affected by the locked-rotor torque during charging, so that applicability is stronger. In addition, compared with the first and second possible implementations, no calculation is required in this implementation, so that processing efficiency can be greatly improved.

With reference to the first aspect, in a fourth possible implementation, an included angle between the target stator magnetic field angle of the motor and the current rotor magnetic field angle is 180°. It may be understood that, when the current rotor magnetic field angle is within an angle range that is symmetrical about an origin with the adjustable stator magnetic field angle range of the motor, it may be ensured that the motor locked-rotor torque is 0 N·m in a manner in which a difference between the stator magnetic field angle of the motor and the current rotor magnetic field angle is a 180° electrical angle, thereby ensuring that a braking system of an electric vehicle is not affected by the locked-rotor torque during charging, so that applicability is stronger. In addition, compared with the first and second possible implementations, a calculation amount can be greatly reduced in this implementation, so that processing efficiency is improved.

With reference to the first aspect, in a fifth possible implementation, an included angle between the target stator magnetic field angle of the motor and the current rotor magnetic field angle is $180° \pm \Delta\theta$, and $\Delta\theta$ is a preset deviation included angle. Because a stator and rotor magnetic field included angle being a 180° electrical angle is a pseudo balance point, the rotor is stuck at a specific position by using a mechanical braking system in a manner in which the included angle between the stator magnetic field angle of the motor and the current rotor magnetic field angle is $180° \pm \Delta\theta$, so that it can be ensured that an implemented angle is controllable, and a generated locked-rotor torque is close to zero, thereby effectively improving control accuracy.

With reference to the first aspect, in a sixth possible implementation, the preset deviation included angle is not greater than 5°.

With reference to the first aspect, in a seventh possible implementation, an amplitude of the first phase current is controlled to be $2I\tan(\theta_s)/[3(\tan(\theta_s) - 1/\sqrt{3})]$ , where $I$ is a charging current value when the motor is in the charging mode, and $\theta_s$ is the target stator magnetic field angle. It may be understood that, in a case of $210° < \theta_s < 270°$, the amplitude of the first phase current can be determined based on a calculation manner in this implementation, and applicability is strong.

With reference to the first aspect, in an eighth possible implementation, when the target stator magnetic field angle is a maximum adjustable stator magnetic field angle in the adjustable stator magnetic field angle range of the motor, the amplitude of the first phase current is controlled to be 0. It may be understood that, the first phase current and the second phase current do not need to be calculated in this implementation, thereby greatly improving processing efficiency.

With reference to the first aspect, in a ninth possible implementation, when the target stator magnetic field angle is a minimum adjustable stator magnetic field angle in the adjustable stator magnetic field angle range of the motor, an amplitude of the second phase current is controlled to be 0. It may be understood that, the first phase current and the second phase current do not need to be calculated in this implementation, thereby greatly improving processing efficiency.

With reference to the first aspect, in a tenth possible implementation, a charging current value of the motor in the charging mode is reduced to a first charging current value when the locked-rotor torque corresponding to the target stator magnetic field angle is greater than a locked-rotor torque threshold. It may be understood that a minimum locked-rotor torque corresponding to the target stator magnetic field angle may be further reduced by reducing the charging current value of the motor in the charging mode, thereby reducing the impact on the braking system of the electric vehicle, so that safety during charging is improved and applicability is strong.

With reference to the first aspect, in an eleventh possible implementation, when the locked-rotor torque corresponding to the target stator magnetic field angle is greater than the locked-rotor torque threshold, a ratio of the locked-rotor torque threshold to the locked-rotor torque corresponding to the target stator magnetic field angle is determined as an attenuation coefficient, the charging current value of the motor in the charging mode is reduced to a second charging current value, and the second charging current value is determined by using the charging current value and the attenuation coefficient when the motor is in the charging mode. It may be understood that the charging current value of the motor in the charging mode may be correspondingly reduced based on different locked-rotor torque thresholds, so as to further reduce the minimum locked-rotor torque corresponding to the target stator magnetic field angle, thereby meeting requirements of braking systems of electric vehicles of different types, so that safety during charging is improved and applicability is stronger.

With reference to the first aspect, in a twelfth possible implementation, the motor is located in the electric vehicle.

According to a second aspect, this application provides a motor locked-rotor torque control apparatus, where the apparatus includes a unit and/or a module configured to perform the motor locked-rotor torque control method provided in the first aspect and/or any one of the possible implementations of the first aspect.

According to a third aspect, this application provides an electric vehicle, where the electric vehicle includes the locked-rotor torque control apparatus provided in the second aspect and a motor.

It should be understood that implementations and beneficial effects of the foregoing plurality of aspects of this application may be mutually referenced.

## BRIEF DESCRIPTION OF DRAWINGS

FIG. 1 is a schematic diagram of a structure of a boost circuit in which a motor winding is reused as an inductor in a wiring manner of a three-phase three-wire system according to the conventional technology;

FIG. 2 is a schematic diagram of an application scenario of a motor locked-rotor torque control apparatus according to this application;

FIG. 3 is a schematic diagram of another application scenario of a motor locked-rotor torque control apparatus according to this application;

FIG. 4 is a schematic diagram of a preset mapping relationship between a stator and rotor magnetic field included angle and a locked-rotor torque according to this application;

FIG. 5 is a schematic flowchart of a motor locked-rotor torque control method according to this application;

FIG. 6 is a schematic diagram of locked-rotor torque sector-based control according to this application; and

FIG. 7 is a schematic diagram of a structure of a motor locked-rotor torque control apparatus according to this application.

## DESCRIPTION OF EMBODIMENTS

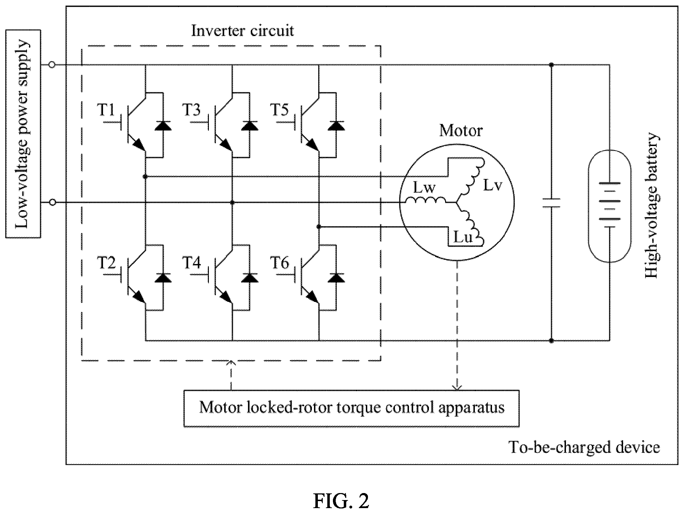

A motor locked-rotor torque control method and locked-rotor torque control apparatus provided in this application may be adapted to different charging scenarios of a to-be-charged device. FIG. 2 is an application scenario of a motor locked-rotor torque control apparatus according to this application. In a charging scenario of a to-be-charged device, the to-be-charged device includes an inverter circuit, a motor, a motor locked-rotor torque control apparatus, and a high-voltage battery. The inverter circuit includes a first phase bridge arm formed by series connection of MOS transistors T1 and T2, a second phase bridge arm formed by series connection of MOS transistors T3 and T4, and a third phase bridge arm formed by series connection of MOS transistors T5 and T6. The first phase bridge arm, the second phase bridge arm, and the third phase bridge arm are connected in parallel to two ends of the high-voltage battery, and a first end (that is, a drain of T1) formed by parallel connection of the first phase bridge arm, the second phase bridge arm, and the third phase bridge arm is connected to a first charging input end of the to-be-charged device. The motor includes a first phase stator winding Lu, a second phase stator winding Lv, and a third phase stator winding Lw. Lu, Lv, and Lw use a wiring manner of a three-phase three-wire system. A first end of the first phase stator winding Lu is connected to a first end of the second phase stator winding Lv and a first end of the third phase stator winding Lw, a second end of the first phase stator winding Lu is connected to a middle point of the third phase bridge arm (that is, a joint of a source of T5 and a drain of T6), a second end of the second phase stator winding Lv is connected to a middle point of the first phase bridge arm (that is, a joint of a source of T1 and a drain of T2), and the first end of the third phase stator winding Lw is connected to a middle point of the second phase bridge arm (that is, a joint of a source of T3 and a drain of T4), and then is connected to a second charging input end of the to-be-charged device. The first charging input end and the second charging input end of the to-be-charged device are connected to two ends of a low-voltage power supply.

In an optional implementation, after the first charging input end and the second charging input end of the to-be-charged device are connected to the two ends of the low-voltage power supply, the motor locked-rotor torque control apparatus controls T1 and T5 to be turned on. In this case, Lu, Lv, and Lw are in an energy storage state, and a current flowing from the low-voltage power supply charges Lu, Lv, and Lw by using T1 and T5. Then, the motor locked-rotor torque control apparatus controls T1 and T5 to be turned off, and semiconductor switches T2 and T6 to be turned on. In this case, Lu, Lv and Lw are in a discharge state. Because a current of an inductor cannot be changed suddenly, the low-voltage power supply, Lu, Lv, and Lw output electric energy to the high-voltage battery at the same time, so that charging to a high-voltage direct current battery is implemented by using a low-voltage alternating current power supply.

In addition, to avoid impact of a motor locked-rotor torque on a braking system of the to-be-charged device in a charging process, after the first charging input end and the second charging input end of the to-be-charged device are connected to the two ends of the low-voltage power supply, the motor locked-rotor torque control apparatus starts to obtain a current rotor magnetic field angle of the motor. A target stator magnetic field angle of the motor is determined based on the current rotor magnetic field angle and a preset mapping relationship between a stator and rotor magnetic field included angle and a locked-rotor torque. Further, a first phase current of a first phase stator winding and a second phase current of a second phase stator winding are controlled by controlling an operating state of each semiconductor switch in the inverter circuit, so that a stator magnetic field angle of the motor is the target stator magnetic field angle. Therefore, it is ensured that in the charging process of the to-be-charged device, the motor locked-rotor torque is always minimum, thereby reducing impact on the braking system of the to-be-charged device and improving safety during charging and applicability.

It should be noted that the to-be-charged device may be an electric-powered device such as an electric vehicle, an electric robot, or an electric aircraft, which is not limited in this application. When the to-be-charged device is an electric vehicle, the motor locked-rotor torque control apparatus may be a motor controller, or may be a vehicle control unit. When the to-be-charged device is an electric robot, the motor locked-rotor torque control apparatus may be a motor controller, or may be a robot controller. When the to-be-charged device is an electric aircraft, the motor locked-rotor torque control apparatus may be a motor controller, or may be an aircraft controller. The following uses an example in which the to-be-charged device is an electric vehicle for description.

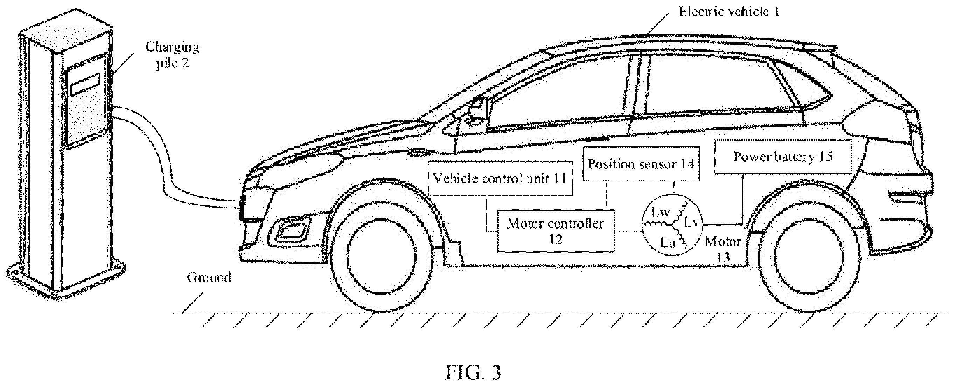

FIG. 3 is a schematic diagram of another application scenario of a motor locked-rotor torque control apparatus according to this application. In a charging scenario of the electric vehicle, an electric vehicle 1 includes a vehicle control unit 11, a motor controller 12, a motor 13, a position sensor 14, and a power battery 15. The motor 13 includes a first phase stator winding Lu, a second phase stator winding Lv, and a third phase stator winding Lw. The locked-rotor torque control apparatus provided in this application is applicable to the motor controller 12 or the vehicle control unit 11 shown in FIG. 3. The motor controller 12 is separately connected to the vehicle control unit 11, the motor 13, and the position sensor 14, and the motor 13 is further separately connected to the position sensor 14 and the power battery 15. Lu, Lv, and Lw in the motor 13 use a wiring manner of a three-phase three-wire system, that is, Lu, Lv, and Lw are connected in a Y-shaped manner, which is a wiring manner in which a neutral line is not led out at a connection point (that is, a neutral point) of Lu, Lv, and Lw.

In an optional implementation, when the locked-rotor torque control apparatus provided in this application is applicable to the motor controller 12, after a charging gun of a charging pile is connected to a charging port of the electric vehicle 1, the vehicle control unit 11 sends a charging instruction and a minimum locked-rotor torque control instruction to the motor controller 12. The motor controller 12 first allocates, based on the received charging instruction and a preset charging current allocation ratio, a charging current value output by the charging pile (for example, the charging current value output by the charging pile is evenly allocated to Lu and Lv), and controls an operating state of a semiconductor switch in the inverter circuit to make the charging pile form a loop with Lu, Lv, and Lw. Specifically, the motor controller 12 separately inputs the allocated first phase current and second phase current into Lu and Lv, and then the first phase current and the second phase current converge at a neutral point and then pass through Lw to the charging pile, so as to implement charging to Lu, Lv, and Lw. Then, the motor controller 12 controls the operating state of the semiconductor switch in the inverter circuit to make the charging pile form a loop with Lu, Lv, Lw, and the power battery 15. Specifically, the motor controller 12 separately inputs the allocated first phase current and second phase current into Lu and Lv, and then the first phase current and the second phase current converge at a neutral point and then pass through Lw to the power battery 15, so as to implement that the charging pile and Lu, Lv, and Lw charge the power battery 15 at the same time. In the charging process, the electric vehicle 1 uses Lu, Lv, and Lw in the motor 13 as boost inductors, and therefore, a low voltage supplied by the charging pile can be boosted to a high voltage and then charges the power battery 15 in the electric vehicle 1, so as to implement a process in which a low-voltage charging pile charges the electric vehicle 1 based on a high-voltage platform, thereby improving compatibility of the electric vehicle 1 with different types of charging piles (that is, high-voltage charging piles and low-voltage charging piles).

In addition, after receiving the minimum locked-rotor torque control instruction, the motor controller 12 obtains a current position of a rotor in the motor 13, that is, a current electrical angle of the rotor, in real time or by using the position sensor 14 at a preset frequency. Then, the motor controller 12 calculates a current rotor magnetic field angle of the motor 13 based on a relationship (for example, a difference between the electrical angle of the rotor and the magnetic field angle of the rotor is 20°) between the electrical angle of the rotor and the magnetic field angle of the rotor. A target stator magnetic field angle of the motor 13 is determined based on the current rotor magnetic field angle and a preset mapping relationship between a stator and rotor magnetic field included angle and a locked-rotor torque. Further, a first phase current of Lu and a second phase current of Lv are controlled, so that a stator magnetic field angle of the motor 13 is the target stator magnetic field angle.

In another optional implementation, when the locked-rotor torque control apparatus provided in this application is applicable to the vehicle control unit 11, after the charging gun of the charging pile is connected to the charging port of the electric vehicle 1, the vehicle control unit 11 sends a charging instruction to the motor controller 12. The motor controller 12 first allocates, based on the received charging instruction and the preset charging current allocation ratio, the charging current value output by the charging pile (for example, the charging current value output by the charging pile is evenly allocated to Lu and Lv), and controls an operating state of a semiconductor switch in the inverter circuit of the motor 13 to make the charging pile form a loop with Lu, Lv, and Lw. Specifically, the motor controller 12 separately inputs the allocated first phase current and second phase current into Lu and Lv, and then the first phase current and the second phase current converge at a neutral point and then pass through Lw to the charging pile, so as to implement charging to Lu, Lv, and Lw. Then, the motor controller 12 controls the operating state of the semiconductor switch in the inverter circuit to make the charging pile form a loop with Lu, Lv, Lw, and the power battery 15. Specifically, the motor controller 12 separately inputs the allocated first phase current and second phase current into Lu and Lv, and then the first phase current and the second phase current converge at a neutral point and then pass through Lw to the power battery 15, so as to implement that the charging pile and Lu, Lv, and Lw charge the power battery 15 at the same time. In the charging process, the electric vehicle 1 uses Lu, Lv, and Lw in the motor 13 as boost inductors, and therefore, a low voltage supplied by the charging pile can be boosted to a high voltage and then charges the power battery 15 in the electric vehicle 1, so as to implement a process in which the low-voltage charging pile charges the electric vehicle 1 based on the high-voltage platform, thereby improving compatibility of the electric vehicle 1 with different types of charging piles (that is, high-voltage charging piles and low-voltage charging piles).

In addition, the vehicle control unit 11 obtains the current position of the rotor in the motor 13, that is, the current electrical angle of the rotor, in real time or by using the position sensor 14 at a preset frequency. Then, the vehicle control unit 11 calculates the current rotor magnetic field angle of the motor 13 based on the relationship (for example, the difference between the electrical angle of the rotor and the magnetic field angle of the rotor is 20°) between the electrical angle of the rotor and the magnetic field angle of the rotor. Based on the current rotor magnetic field angle and the preset mapping relationship between a stator and rotor magnetic field included angle and a locked-rotor torque, the target stator magnetic field angle of the motor 13 is determined, and a first phase current value of Lu and a second phase current value of Lv are calculated when the stator magnetic field angle of the motor 13 is the target stator magnetic field angle. Further, the motor controller 12 controls the first phase current of Lu and the second phase current of Lv based on a first charging instruction in a manner of sending the first charging instruction (carrying the first phase current value of Lu and the second phase current value of Lv when the stator magnetic field angle of the motor 13 is the target stator magnetic field angle) to the motor controller 12, so that the stator magnetic field angle of the motor 13 is the target stator magnetic field angle.

It may be understood that, in the charging process of the electric vehicle 1, the locked-rotor torque control apparatus provided in this application may control a current on a three-phase stator winding to minimize a locked-rotor torque of the motor 13, thereby effectively reducing impact on the braking system of the electric vehicle 1, and effectively improving safety of the electric vehicle 1 during charging, so that applicability is strong.

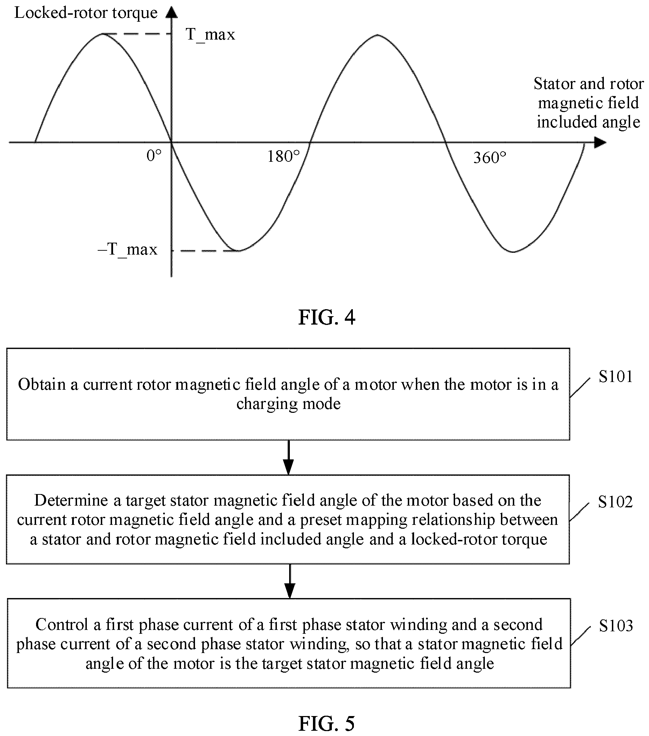

With reference to FIG. 4 to FIG. 7, the following uses an example in which a motor is located in an electric vehicle to describe an operating principle of the motor locked-rotor torque control apparatus provided in this application.

When the motor is in a charging mode, the stator magnetic field angle of the motor is adjustable in a specific range. Therefore, the motor locked-rotor torque control apparatus may adjust an angle difference between the stator magnetic field angle and the current rotor magnetic field angle by adjusting the stator magnetic field angle based on the current rotor magnetic field angle of the motor and the preset mapping relationship between a stator and rotor magnetic field included angle and a locked-rotor torque, so that the motor locked-rotor torque is minimum.

For ease of understanding, the following first describes the preset mapping relationship between a stator and rotor magnetic field included angle and a locked-rotor torque. FIG. 4 is a schematic diagram of a preset mapping relationship between a stator and rotor magnetic field included angle and a locked-rotor torque according to this application. As shown in FIG. 4, a horizontal axis in a coordinate axis represents a stator and rotor magnetic field included angle, that is, an angle difference between a stator magnetic field angle of a motor and a magnetic field angle of a rotor, and a vertical axis represents a locked-rotor torque of the motor, that is, a torque that still exists when a motor rotor does not rotate.

It can be learned from FIG. 4 that, when the stator and rotor magnetic field included angle is near a 0° position, when a rotor position makes the stator and rotor magnetic field included angle not reach 0°, the locked-rotor torque is positive, so that the rotor is pulled to rotate in a forward direction, which makes the stator and rotor magnetic field included angle reach around 0°. When the rotor position makes the stator and rotor magnetic field included angle exceed 0°, the locked-rotor torque is negative, so that the rotor is pulled to rotate in a reverse direction, which also makes the stator and rotor magnetic field included angle reach around 0°. Therefore, 0° is a true balance point, that is, when the stator and rotor magnetic field included angle reaches 0°, no torque is generated, and any position that deviates from this point tends to be pulled back to this point.

When the stator and rotor magnetic field included angle is near a 180° position, when the rotor position makes the stator and rotor magnetic field included angle not reach the 180°, the locked-rotor torque is negative, so that the rotor is pulled to rotate in the reverse direction, which further makes the stator and rotor magnetic field included angle deviate from the 180° position. When the rotor position makes the stator and rotor magnetic field included angle exceed 180°, the locked-rotor torque is positive, so that the rotor is pulled to rotate in the forward direction, which also makes the stator and rotor magnetic field included angle further deviate from the 180° position. Therefore, 180° is a pseudo balance point, that is, when the stator and rotor magnetic field included angle reaches 180°, although there is also a zero torque, a small deviation from this point may lead to a further increase in a deviation of an actual position of the rotor from this point. Considering actual impact such as a position signal and control accuracy, when target control with a zero locked-rotor torque is used, it is difficult for a system to stabilize the stator and rotor magnetic field included angle at the 180° position, thereby generating oscillation. For this reason, active control with an angle deviation may be used actually. For example, the stator and rotor magnetic field included angle is controlled to be 179° or 181°, to make the rotor be stuck at a specific position by using a mechanical braking system, it can be ensured that an achieved angle is controllable, and at the same time, a generated locked-rotor torque is close to zero.

When the stator and rotor magnetic field included angle is within (0°, 180°) and (180°, 360°), the stator and rotor magnetic field included angle may be adjusted in an adjustable stator and rotor magnetic field included angle range to minimize the locked-rotor torque based on the schematic diagram of the mapping relationship shown in FIG. 4.

Clearly, the preset mapping relationship between a stator and rotor magnetic field included angle and a locked-rotor torque is periodic, and [0°, 360°] is one cycle. Therefore, when the stator and rotor magnetic field included angle is not within [0°, 360°], references may be made to the foregoing description when the stator and rotor magnetic field included angle is within [0°, 360°]. Details are not described herein again.

FIG. 5 is a schematic flowchart of a motor locked-rotor torque control method according to this application. The motor locked-rotor torque control method may include the following steps:

S101: Obtain a current rotor magnetic field angle of a motor when the motor is in a charging mode.

The motor includes a first phase stator winding, a second phase stator winding, and a third phase stator winding. When the motor is in the charging mode, the first phase stator winding and the second phase stator winding are connected in parallel, and then are connected to the third phase stator winding, that is, the first phase stator winding, the second phase stator winding, and the third phase stator winding of the motor are connected in a wiring manner of a three-phase three-wire system.

In an optional implementation, when an electric vehicle in which the motor is located is in the charging mode, that is, when the motor receives a charging instruction, a motor locked-rotor torque control apparatus obtains a current position of a motor rotor, that is, a current electrical angle of the rotor, by using a position sensor in the electric vehicle. Then, the motor locked-rotor torque control apparatus calculates the current rotor magnetic field angle of the motor based on a relationship (for example, a difference between an electrical angle of the rotor and a magnetic field angle of the rotor is 20°) between the electrical angle of the rotor and the magnetic field angle of the rotor.

S102: Determine a target stator magnetic field angle of the motor based on the current rotor magnetic field angle and a preset mapping relationship between a stator and rotor magnetic field included angle and a locked-rotor torque.

Specifically, the motor locked-rotor torque control apparatus determines an adjustable stator and rotor magnetic field included angle range of the motor based on the current rotor magnetic field angle and an adjustable stator magnetic field angle range of the motor. Based on the preset mapping relationship between a stator and rotor magnetic field included angle and a locked-rotor torque, an adjustable locked-rotor torque range corresponding to the adjustable stator and rotor magnetic field included angle range is determined, and a stator and rotor magnetic field included angle corresponding to a minimum locked-rotor torque in the adjustable locked-rotor torque range is determined as a target stator and rotor magnetic field included angle. Further, the target stator magnetic field angle of the motor is determined based on the target stator and rotor magnetic field included angle and the current rotor magnetic field angle.

The following first describes the adjustable stator magnetic field angle range of the motor with reference to FIG.

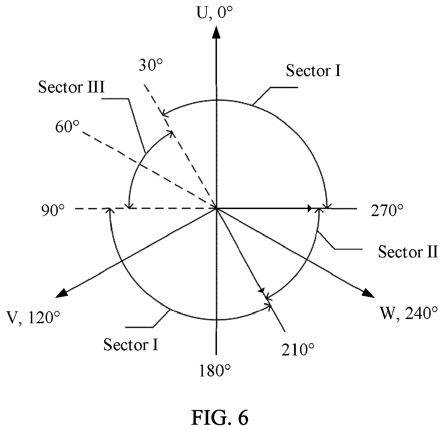

6. FIG. 6 is a schematic diagram of locked-rotor torque sector-based control according to this application. As shown in FIG. 6, electrical angles of a U axis, a V axis, and a W axis are respectively 0°, 120°, and 240°, that is, electrical angles of the first phase stator winding Lu, the second phase stator winding Lv, and the third phase stator winding Lw are respectively 0°, 120°, and 240°. It is assumed that a direction in which a current flows out is positive. When the motor is in the charging mode, a current is injected from the first phase stator winding Lu and the second phase stator winding Lv, and flows out from the third phase stator winding Lw. When a charging current of the motor in the charging mode is evenly allocated to the first phase stator winding Lu and the second phase stator winding Lv, a direction of a first phase current is a 180° electrical angle, and a direction of a second phase current is a 300° electrical angle. Because a first phase current value is equal to a second phase current value, after a vector corresponding to the first phase current is synthesized with a vector corresponding to the second phase current, a direction of a synthesized vector is a 240° electrical angle. Because a direction of a third phase current is consistent with the direction of the synthesized vector, a stator magnetic field angle is a 240° electrical angle.

Actually, the stator magnetic field angle (that is, a vector position obtained after three vectors of the first phase current to the third phase current are synthesized) may be adjusted within a specific range, that is, a shunt ratio of the first phase stator winding and the second phase stator winding is adjusted, so that adjustment of the stator magnetic field angle with a range of 240°±30° can be implemented. For example, when all charging currents flow through the first phase stator winding, and a current on the second phase stator winding is zero, it may be learned, according to a vector synthesis rule, that the stator magnetic field angle is a 210° electrical angle. When all charging currents flow through the second phase stator winding, and a current on the first phase stator winding is zero, it may be learned, according to the vector synthesis rule, that the stator magnetic field angle is 270°. Therefore, in the coordinate system shown in FIG. 6, the adjustable stator magnetic field angle range of the motor is [210°, 270°].

For example, assuming that the current rotor magnetic field angle is a 120° electrical angle, the adjustable stator magnetic field angle range of the motor is [210°, 270°], and the preset mapping relationship between a stator and rotor magnetic field included angle and a locked-rotor torque is shown in FIG. 4, the motor locked-rotor torque control apparatus obtains the adjustable stator and rotor magnetic field included angle range [90°, 150°] by calculating an angle difference between a minimum stator magnetic field angle 210° electrical angle in the adjustable stator magnetic field angle range and a current rotor magnetic field angle 120° electrical angle, and an angle difference between a maximum stator magnetic field angle 270° electrical angle in the adjustable stator magnetic field angle range and the current rotor magnetic field angle 120° electrical angle. Further, based on the mapping relationship shown in FIG. 3, an adjustable locked-rotor torque range [$-T\_max$, $-T\_max/3$] corresponding to the adjustable stator and rotor magnetic field included angle range [90°, 150°] is calculated. Because plus-minus signs of the locked-rotor torque represent a direction of the locked-rotor torque and do not represent a size of the locked-rotor torque, a minimum locked-rotor torque in the adjustable locked-rotor torque range is $-T\_max/3$, and a stator and rotor magnetic field included angle 150° electrical angle corresponding to $-T\_max/3$ is determined as the target stator and rotor magnetic field included angle. Then, the motor locked-rotor torque control apparatus determines a sum 270° electrical angle of the current rotor magnetic field angle 120° electrical angle and a target stator and rotor magnetic field included angle 150° electrical angle as the target stator magnetic field angle.

In an optional implementation, when the current rotor magnetic field angle is in a sector I, the motor locked-rotor torque control apparatus calculates a first stator and rotor magnetic field included angle between the maximum stator magnetic field angle 270° electrical angle in the adjustable stator magnetic field angle range of the motor and the current rotor magnetic field angle, and a second stator and rotor magnetic field angle between the minimum stator magnetic field angle 210° electrical angle and the current rotor magnetic field angle. Based on the mapping relationship shown in FIG. 4, a first locked-rotor torque corresponding to the first stator and rotor magnetic field included angle and a second locked-rotor torque corresponding to the second stator and rotor magnetic field included angle are determined. Further, a stator magnetic field angle corresponding to a smaller value in the first locked-rotor torque and the second locked-rotor torque is determined as the target stator magnetic field angle. The sector I is (270°+2πn, 390°+2πn) and (90°+2πn, 210°+2πn), and n is an integer.

In another optional implementation, when the current rotor magnetic field angle is in a sector II, the current rotor magnetic field angle is in the adjustable stator magnetic field angle range [210°, 270°] of the motor. It can be learned from the mapping relationship shown in FIG. 4 that the motor locked-rotor torque is 0 N·m when the stator and rotor magnetic field included angle is a 0° electrical angle. Therefore, when the current rotor magnetic field angle is in the sector II, the motor locked-rotor torque control apparatus determines that the target stator magnetic field angle is the current rotor magnetic field angle, so as to ensure that the motor locked-rotor torque is 0 N·m. The sector II is [210°+2πn, 270°+2πn], and n is an integer.

In another optional implementation, when the current rotor magnetic field angle is in a sector III, the current rotor magnetic field angle is located in an area that is symmetrical about an origin with the adjustable stator magnetic field angle range of the motor. It can be learned from the mapping relationship shown in FIG. 4 that the motor locked-rotor torque is 0 N·m when the stator and rotor magnetic field included angle is a 180° electrical angle. Therefore, when the current rotor magnetic field angle is in the sector III, the motor locked-rotor torque control apparatus determines that an included angle between the target stator magnetic field angle and the current rotor magnetic field angle is a 180° electrical angle, so as to ensure that the motor locked-rotor torque is 0 N·m. The sector III is [30°+2πn, 90°+2πn], and n is an integer. Further, because the stator and rotor magnetic field included angle 180° electrical angle is a pseudo balance point, active control with an angle deviation may be used, that is, the motor locked-rotor torque control apparatus determines that the included angle between the target stator magnetic field angle of the motor and the current rotor magnetic field angle is 180°±Δθ, Δθ is a preset deviation included angle, and 0°<Δθ≤5°. Further, the rotor is enabled to be stuck at a specific position by using a mechanical braking system, which can ensure that an achieved angle is controllable, and at the same time, a generated locked-rotor torque is close to zero.

S103: Control a first phase current of the first phase stator winding and a second phase current of the second phase stator winding, so that a stator magnetic field angle of the motor is the target stator magnetic field angle.

In an optional implementation, when the locked-rotor torque corresponding to the target stator magnetic field angle determined based on step S102 is less than or equal to a locked-rotor torque threshold, the motor locked-rotor torque control apparatus adjusts an allocation ratio of a charging current value of the motor in the charging mode for the first phase current and the second phase current, so that the stator magnetic field angle of the motor is the target stator magnetic field angle.

In an optional embodiment, when the target stator magnetic field angle is within [210°, 270°], there may be:

$$I_u\,\vec{u} + I_v\,\vec{v} + I_w\,\vec{w} = I_s\,\vec{s} \ldots (1)$$

$$I_u + I_v = I_w \ldots (2)$$

$I_u$, $I_v$, $I_w$, and $I_s$ are scalars, and respectively represent a first phase current value of the first phase stator winding, a second phase current value of the second phase stator winding, a third phase current value of the third phase stator winding, and a synthesized stator magnetic field current value; and $I_u$, $I_v$, and $I_w$ all are greater than zero, and $I_w$ is the charging current value $I$ when the motor is in the charging mode. $\vec{u}$, $\vec{v}$, $\vec{w}$, and $\vec{s}$ respectively represent a direction of the first phase current, a direction of the second phase current, a direction of the third phase current, and a direction of a stator magnetic field.

Formulas (2) and (1) are combined to obtain:

$$I_u\,\vec{u} + (I_w - I_u)\,\vec{v} + I_w\,\vec{w} = I_s\,\vec{s} \ldots (3)$$

If $\vec{u} = \angle 0°$, formula (3) may be rewritten to:

$$I_u \angle 0° + (I_w - I_u) \angle 120° + I_w \angle 240° = I_s \angle \theta_s \ldots (4)$$

$\theta_s$ is the target stator magnetic field angle, that is, an anti-clockwise angle of a stator synthesis vector from a U axis.

The following can be obtained after similar terms are united:

$$(I_u \angle 0° + I_u \angle 300°) + (I_w \angle 120° + I_w \angle 240°) = I_s \angle \theta_s \ldots (5)$$

$$\sqrt{3}I_u \angle 330° + I_w \angle 180° = I_s \angle \theta_s \ldots (6)$$

Further, two sets of vectors are decomposed onto the U axis and an axis that is perpendicular to the U axis to write equations, and the following can be obtained:

$$\sqrt{3}I_u \cos(30°) - I_w = 3I_u/2 - I_w = I_s \cos(\theta_s) \ldots (7)$$

$$\sqrt{3}I_u \sin(30°) = \sqrt{3}I_u/2 = I_s\sin(\theta_s)\dots (8)$$

According to formulas (8) and (7), the following may be obtained: $I_u = 2I_w \tan(\theta_s)/[3(\tan(\theta_s)- 1/\sqrt{3})]$ .

Therefore, when the target stator magnetic field angle is within [210°, 270°], the motor locked-rotor torque control apparatus may control an amplitude $I_u = 2I\tan(\theta_s)/[3(\tan(\theta_s) - 1/\sqrt{3})]$ of the first phase current, to control an amplitude of the second phase current $I_v = I - I_u$. In addition, it is ensured that a charging current is injected from the first phase stator winding and the second phase stator winding, and flows out from the third phase stator winding, thereby ensuring that the stator magnetic field angle of the motor is consistent with the target stator magnetic field angle. I is the charging current value when the motor is in the charging mode.

In another optional embodiment, when the target stator magnetic field angle is a maximum adjustable stator magnetic field angle 270° electrical angle in the adjustable stator magnetic field angle range of the motor, the motor locked-rotor torque control apparatus controls the amplitude of the first phase current $I_u = 0$, and controls the amplitude of the second phase current $I_v = I$. In addition, it is ensured that the charging current is injected from the first phase stator winding and the second phase stator winding, and flows out from the third phase stator winding, thereby ensuring that the stator magnetic field angle of the motor is a 270° electrical angle. I is the charging current value when the motor is in the charging mode.

In still another optional embodiment, when the target stator magnetic field angle is a minimum adjustable stator magnetic field angle 210° electrical angle in the adjustable stator magnetic field angle range of the motor, the motor locked-rotor torque control apparatus controls the amplitude of the first phase current $I_u = I$, and controls the amplitude of the second phase current $I_v = 0$. In addition, it is ensured that the charging current is injected from the first phase stator winding and the second phase stator winding, and flows out from the third phase stator winding, thereby ensuring that the stator magnetic field angle of the motor is a 210° electrical angle. 1 is the charging current value when the motor is in the charging mode.

In another optional implementation, when the locked-rotor torque corresponding to the target stator magnetic field angle determined based on step S 102 is greater than a locked-rotor torque threshold (for example, a maximum torque acceptable to the braking system of the electric vehicle), the motor locked-rotor torque control apparatus reduces the charging current value of the motor in the charging mode to a first charging current value, and further adjusts an allocation ratio of the first charging current value for the first phase current and the second phase current, so that the stator magnetic field angle of the motor is the target stator magnetic field angle, and further reduces a minimum locked-rotor torque corresponding to the target stator magnetic field angle by reducing the charging current value of the motor in the charging mode, thereby reducing impact on the braking system of the electric vehicle, so that safety during charging is improved and applicability is strong. Herein, the motor locked-rotor torque control apparatus adjusts the allocation ratio of the first charging current value for the first phase current and the second phase current, so that the stator magnetic field angle of the motor is the target stator magnetic field angle. For a specific implementation, refer to the corresponding description in the case in which the locked-rotor torque corresponding to the target stator magnetic field angle is less than or equal to the locked-rotor torque threshold, the motor locked-rotor torque control apparatus controls the first phase current and the second phase current, so that the stator magnetic field angle of the motor is the target stator magnetic field angle. Details are not described herein again.

Further, to adapt to different requirements of different vehicle types on locked-rotor torque thresholds, when the locked-rotor torque corresponding to the target stator magnetic field angle determined based on the step S102 is greater than the locked-rotor torque threshold, the motor locked-rotor torque control apparatus determines a ratio of the locked-rotor torque threshold to the locked-rotor torque corresponding to the target stator magnetic field angle as an attenuation coefficient, and determines a product of the attenuation coefficient and the charging current value of the motor in the charging mode as a second charging current value. The charging current value of the motor in the charging mode is reduced to the second charging current value. Further, an allocation ratio of the second charging current value is adjusted for the first phase current and the second phase current, so that the stator magnetic field angle of the motor is the target stator magnetic field angle. In addition, the charging current value of the motor in the charging mode may be correspondingly reduced based on different locked-rotor torque thresholds, so as to further reduce the minimum locked-rotor torque corresponding to the target stator magnetic field angle, thereby meeting requirements of braking systems of electric vehicles of different types, so that safety during charging is improved and applicability is stronger.

In this application, the stator magnetic field angle of the motor may be adjusted in the adjustable stator magnetic field angle range of the motor, so that the motor locked-rotor torque is minimum, thereby reducing impact on the braking system of the electric vehicle, so that safety during charging is improved and applicability is strong.

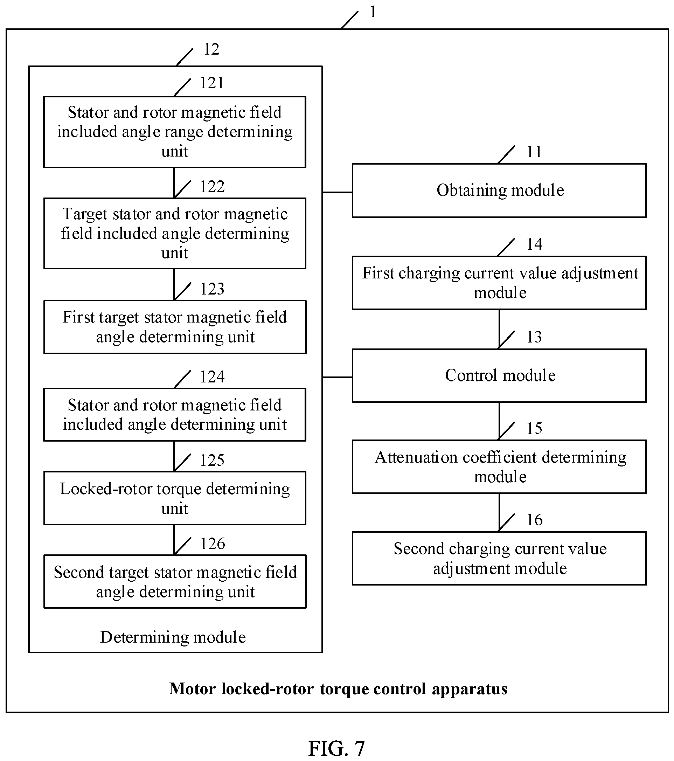

FIG. 7 is a schematic diagram of a structure of a motor locked-rotor torque control apparatus according to this application. As shown in FIG. 7, the motor locked-rotor torque control apparatus 1 may include an obtaining module 11, a determining module 12, a control module 13, a first charging current value adjustment module 14, an attenuation coefficient determining module 15, and a second charging current value adjustment module 16.

The obtaining module 11 is configured to obtain a current rotor magnetic field angle of a motor when the motor is in a charging mode, where the motor includes a first phase stator winding, a second phase stator winding, and a third phase stator winding, and when the motor is in the charging mode, the first phase stator winding and the second phase stator winding are connected in parallel, and then are connected to the third phase stator winding;

the determining module 12 is configured to determine a target stator magnetic field angle of the motor based on the current rotor magnetic field angle and a preset mapping relationship between a stator and rotor magnetic field included angle and a locked-rotor torque; and the control module 13 is configured to control a first phase current of the first phase stator winding and a second phase current of the second phase stator winding, so that a stator magnetic field angle of the motor is the target stator magnetic field angle.

In an optional implementation, the determining module 12 includes:

a stator and rotor magnetic field included angle range determining unit 121, configured to determine an adjustable stator and rotor magnetic field included angle range based on the current rotor magnetic field angle and an adjustable stator magnetic field angle range of the motor;

a target stator and rotor magnetic field included angle determining unit 122, configured to: determine an adjustable locked-rotor torque range corresponding to the adjustable stator and rotor magnetic field included angle range based on the preset mapping relationship between a stator and rotor magnetic field included angle and a locked-rotor torque, and determine a stator and rotor magnetic field included angle corresponding to a minimum locked-rotor torque in the adjustable locked-rotor torque range as a target stator and rotor magnetic field included angle; and

a first target stator magnetic field angle determining unit 123, configured to determine the target stator magnetic field angle of the motor based on the target stator and rotor magnetic field included angle and the current rotor magnetic field angle.

In an optional implementation, the determining module 12 includes:

a stator and rotor magnetic field included angle determining unit 124, configured to: determine a first stator and rotor magnetic field included angle between a maximum stator magnetic field angle in the adjustable stator magnetic field angle range of the motor and the current rotor magnetic field angle, and a second stator and rotor magnetic field angle between a minimum stator magnetic field angle and the current rotor magnetic field angle;

a locked-rotor torque determining unit 125, configured to determine a first locked-rotor torque corresponding to the first stator and rotor magnetic field included angle and a second locked-rotor torque corresponding to the second stator and rotor magnetic field included angle based on the preset mapping relationship between a stator and rotor magnetic field included angle and a locked-rotor torque; and

a second target stator magnetic field angle determining unit 126, configured to determine a stator magnetic field angle corresponding to a smaller value in the first locked-rotor torque and the second locked-rotor torque as the target stator magnetic field angle.

In an optional implementation, the determining module 12 is configured to determine the target stator magnetic field angle of the motor as the current rotor magnetic field angle.

In an optional implementation, the determining module 12 is configured to determine that an included angle between the target stator magnetic field angle of the motor and the current rotor magnetic field angle is 180°.

In an optional implementation, the determining module 12 is configured to determine that the included angle between the target stator magnetic field angle of the motor and the current rotor magnetic field angle is $180° \pm \Delta\theta$, where $\Delta\theta$ is a preset deviation included angle.

In an optional implementation, the preset deviation included angle is not greater than 5°.

In an optional implementation, the control module 13 is configured to control an amplitude of the first phase current to be $2I\tan(\theta_s)/[3(\tan(\theta_s) - 1/\sqrt{3})]$, where $I$ is a charging current value of the motor in the charging mode, and $\theta_s$ is the target stator magnetic field angle.

In an optional implementation, the control module 13 is configured to control the amplitude of the first phase current to be 0 when the target stator magnetic field angle is a maximum adjustable stator magnetic field angle in the adjustable stator magnetic field angle range of the motor.

In an optional implementation, the control module 13 is configured to control an amplitude of the second phase current to be 0 when the target stator magnetic field angle is a minimum adjustable stator magnetic field angle in the adjustable stator magnetic field angle range of the motor.

In an optional implementation, the foregoing apparatus further includes:
the first charging current value adjustment module 14, configured to: reduce the charging current value of the motor in the charging mode to a first charging current value when the locked-rotor torque corresponding to the target stator magnetic field angle is greater than a locked-rotor torque threshold.

In an optional implementation, the foregoing apparatus further includes:

the attenuation coefficient determining module 15, configured to: determine a ratio of the locked-rotor torque threshold to the locked-rotor torque corresponding to the target stator magnetic field angle as an attenuation coefficient when the locked-rotor torque corresponding to the target stator magnetic field angle is greater than the locked-rotor torque threshold; and
the second charging current value adjustment module 16, configured to: reduce the charging current value of the motor in the charging mode to a second charging current value, where the second charging current value is determined by using the charging current value and the attenuation coefficient when the motor is in the charging mode.

In an optional implementation, the motor is located in an electric vehicle.

It may be understood that the motor locked-rotor torque control apparatus 1 is configured to implement steps performed by the motor locked-rotor torque control apparatus in the embodiment shown in FIG. 5. For a specific implementation and a corresponding beneficial effect of a function block included in the motor locked-rotor torque control apparatus 1 in FIG. 7, references may be made to a specific description of the foregoing embodiment in FIG. 5, and details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motor locked-rotor torque control method, wherein the motor comprises a first phase stator winding, a second phase stator winding, and a third phase stator winding, and when the motor is in a charging mode, the first phase stator winding and the second phase stator winding are connected in parallel, and then are connected to the third phase stator winding; and the method comprises:

   when the motor is in the charging mode, obtaining a current rotor magnetic field angle of the motor;
   determining a target stator magnetic field angle of the motor based on the current rotor magnetic field angle and a preset mapping relationship between a stator and rotor magnetic field included angle and a locked-rotor torque; and
   controlling a first phase current of the first phase stator winding and a second phase current of the second phase stator winding, so that a stator magnetic field angle of the motor is the target stator magnetic field angle.

2. The method according to claim 1, wherein the determining a target stator magnetic field angle of the motor based on the current rotor magnetic field angle and a preset mapping relationship between a stator and rotor magnetic field included angle and a locked-rotor torque comprises:

   determining an adjustable stator and rotor magnetic field included angle range based on the current rotor magnetic field angle and an adjustable stator magnetic field angle range of the motor;
   determining an adjustable locked-rotor torque range corresponding to the adjustable stator and rotor magnetic field included angle range based on the preset mapping relationship between the stator and rotor magnetic field included angle and the locked-rotor torque, and determining a stator and rotor magnetic field included angle corresponding to a minimum locked-rotor torque in the adjustable locked-rotor torque range as a target stator and rotor magnetic field included angle; and
   determining the target stator magnetic field angle of the motor based on the target stator and rotor magnetic field included angle and the current rotor magnetic field angle.

3. The method according to claim 1, wherein the determining a target stator magnetic field angle of the motor based on the current rotor magnetic field angle and a preset mapping relationship between a stator and rotor magnetic field included angle and a locked-rotor torque comprises:

determining a first stator and rotor magnetic field included angle between a maximum stator magnetic field angle in the adjustable stator magnetic field angle range of the motor and the current rotor magnetic field angle, and a second stator and rotor magnetic field angle between a minimum stator magnetic field angle and the current rotor magnetic field angle;

determining a first locked-rotor torque corresponding to the first stator and rotor magnetic field included angle and a second locked-rotor torque corresponding to the second stator and rotor magnetic field included angle based on the preset mapping relationship between the stator and rotor magnetic field included angle and the locked-rotor torque; and

determining a stator magnetic field angle corresponding to a smaller value in the first locked-rotor torque and the second locked-rotor torque as the target stator magnetic field angle.

4. The method according to claim 1, wherein the determining a target stator magnetic field angle of the motor based on the current rotor magnetic field angle and a preset mapping relationship between a stator and rotor magnetic field included angle and a locked-rotor torque comprises:

determining the target stator magnetic field angle of the motor as the current rotor magnetic field angle.

5. The method according to claim 1, wherein the determining a target stator magnetic field angle of the motor based on the current rotor magnetic field angle and a preset mapping relationship between a stator and rotor magnetic field included angle and a locked-rotor torque comprises:

determining that an included angle between the target stator magnetic field angle of the motor and the current rotor magnetic field angle is 180°.

6. The method according to claim 1, wherein the determining a target stator magnetic field angle of the motor based on the current rotor magnetic field angle and a preset mapping relationship between a stator and rotor magnetic field included angle and a locked-rotor torque comprises:

determining that an included angle between the target stator magnetic field angle of the motor and the current rotor magnetic field angle is $180°\pm\Delta\theta$, and $\Delta\theta$ is a preset deviation included angle.

7. The method according to claim 6, wherein the preset deviation angle is not greater than 5°.

8. A motor locked-rotor torque control apparatus, wherein the motor comprises a first phase stator winding, a second phase stator winding, and a third phase stator winding, and when the motor is in a charging mode, the first phase stator winding and the second phase stator winding are connected in parallel, and then are connected to the third phase stator winding; and the apparatus comprises:

an obtaining module, configured to: when the motor is in the charging mode, obtain a current rotor magnetic field angle of the motor;

a determining module, configured to determine a target stator magnetic field angle of the motor based on the current rotor magnetic field angle and a preset mapping relationship between a stator and rotor magnetic field included angle and a locked-rotor torque; and

a control module, configured to control a first phase current of the first phase stator winding and a second phase current of the second phase stator winding, so that a stator magnetic field angle of the motor is the target stator magnetic field angle.

9. The apparatus according to claim 8, wherein the determining module comprises:

a stator and rotor magnetic field included angle range determining unit, configured to determine an adjustable stator and rotor magnetic field included angle range based on the current rotor magnetic field angle and an adjustable stator magnetic field angle range of the motor;

a target stator and rotor magnetic field included angle determining unit, configured to: determine an adjustable locked-rotor torque range corresponding to the adjustable stator and rotor magnetic field included angle range based on the preset mapping relationship between the stator and rotor magnetic field included angle and the locked-rotor torque, and determine a stator and rotor magnetic field included angle corresponding to a minimum locked-rotor torque in the adjustable locked-rotor torque range as a target stator and rotor magnetic field included angle; and

a first target stator magnetic field angle determining unit, configured to determine the target stator magnetic field angle of the motor based on the target stator and rotor magnetic field included angle and the current rotor magnetic field angle

10. The apparatus according to claim 8, wherein the determining module comprises:

a stator and rotor magnetic field included angle determining unit, configured to: determine a first stator and rotor magnetic field included angle between a maximum stator magnetic field angle in the adjustable stator magnetic field angle range of the motor and the current rotor magnetic field angle, and a second stator and rotor magnetic field angle between a minimum stator magnetic field angle and the current rotor magnetic field angle;
a locked-rotor torque determining unit, configured to determine a first locked-rotor torque corresponding to the first stator and rotor magnetic field included angle and a second locked-rotor torque corresponding to the second stator and rotor magnetic field included angle based on the preset mapping relationship between the stator and rotor magnetic field included angle and the locked-rotor torque; and
a second target stator magnetic field angle determining unit, configured to determine a stator magnetic field angle corresponding to a smaller value in the first locked-rotor torque and the second locked-rotor torque as the target stator magnetic field angle.

11. The apparatus according to claim 8, wherein the determining module is configured to determine the target stator magnetic field angle of the motor as the current rotor magnetic field angle.

12. The apparatus according to claim 8, wherein the determining module is configured to determine that an included angle between the target stator magnetic field angle of the motor and the current rotor magnetic field angle is 180°.

13. The apparatus according to claim 8, wherein the determining module is configured to determine that an included angle between the target stator magnetic field angle of the motor and the current rotor magnetic field angle is $180° \pm \Delta\theta$, wherein $\Delta\theta$ is a preset deviation included angle.

14. The apparatus according to claim 13, wherein the preset deviation angle is not greater than 5°.

15. The apparatus according to claim 8, wherein the control module is configured to control an amplitude of the first phase current to be $2I\tan(\theta_s)/[3(\tan(\theta_s) - 1/\sqrt{3})]$, and $I$ is a charging current value when the motor is in the charging mode, and $\theta_s$ is the target stator magnetic field angle.

16. The apparatus according to claim 8, wherein the control module is configured to control an amplitude of the first phase current to be 0 when the target stator magnetic field angle is a maximum adjustable stator magnetic field angle in the adjustable stator magnetic field angle range of the motor.

17. The apparatus according to claim 8, wherein the control module is configured to control an amplitude of the second phase current to be 0 when the target stator magnetic field angle is a minimum adjustable stator magnetic field angle in the adjustable stator magnetic field angle range of the motor.

(a)

(b)

FIG. 1

FIG. 2

FIG. 3

Locked-rotor torque

T_max

Stator and rotor magnetic field included angle

0°     180°     360°

−T_max

FIG. 4

Obtain a current rotor magnetic field angle of a motor when the motor is in a charging mode — S101

Determine a target stator magnetic field angle of the motor based on the current rotor magnetic field angle and a preset mapping relationship between a stator and rotor magnetic field included angle and a locked-rotor torque — S102

Control a first phase current of a first phase stator winding and a second phase current of a second phase stator winding, so that a stator magnetic field angle of the motor is the target stator magnetic field angle — S103

FIG. 5

FIG. 6

/ 1

/ 12

/ 121

Stator and rotor magnetic field
included angle range determining
unit

/ 122

Target stator and rotor magnetic
field included angle determining
unit

/ 123

First target stator magnetic field
angle determining unit

/ 124

Stator and rotor magnetic field
included angle determining unit

/ 125

Locked-rotor torque determining
unit

/ 126

Second target stator magnetic field
angle determining unit

Determining module

/ 11

Obtaining module

/ 14

First charging current value adjustment
module

/ 13

Control module

/ 15

Attenuation coefficient determining
module

/ 16

Second charging current value
adjustment module

**Motor locked-rotor torque control apparatus**

FIG. 7

Europäisches
Patentamt

European
Patent Office

Office européen
des brevets

# EUROPEAN SEARCH REPORT

Application Number

EP 22 21 4441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 081 429 A1 (NISSAN MOTOR MFG UK LTD [GB]) 19 October 2016 (2016-10-19) * abstract * * paragraphs [0001] - [0112] * * figures 1-14 * | 1-17 | INV. B60L15/02 B60L50/51 B60L53/24 |
| X | JP H11 75323 A (DENSO CORP) 16 March 1999 (1999-03-16) * the whole document * | 1-17 | |
| X | CN 112 440 782 A (BYD CO LTD) 5 March 2021 (2021-03-05) * the whole document * | 1-17 | |
| A | EP 3 902 087 A1 (BYD CO LTD [CN]) 27 October 2021 (2021-10-27) * the whole document * | 1-17 | |
| A | US 2017/072924 A1 (KAUFMANN TOM [DE] ET AL) 16 March 2017 (2017-03-16) * abstract * * paragraphs [0002] - [0079] * * figures 1-4 * | 1-17 | |

TECHNICAL FIELDS
SEARCHED      (IPC)

B60L
H02P

The present search report has been drawn up for all claims

| Place of search | Date of completion of the search | Examiner |
|---|---|---|
| The Hague | 20 April 2023 | Hagan, Colm |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4441

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2023

| Patent document cited in search report | | Publication date | Patent family member(s) | | Publication date |
|---|---|---|---|---|---|
| EP 3081429 | A1 | 19-10-2016 | EP | 3081429 A1 | 19-10-2016 |
| | | | GB | 2537351 A | 19-10-2016 |
| JP H1175323 | A | 16-03-1999 | NONE | | |
| CN 112440782 | A | 05-03-2021 | NONE | | |
| EP 3902087 | A1 | 27-10-2021 | AU | 2019410616 A1 | 12-08-2021 |
| | | | CN | 110971173 A | 07-04-2020 |
| | | | EP | 3902087 A1 | 27-10-2021 |
| | | | JP | 2022514789 A | 15-02-2022 |
| | | | US | 2022077709 A1 | 10-03-2022 |
| | | | WO | 2020125625 A1 | 25-06-2020 |
| US 2017072924 | A1 | 16-03-2017 | CN | 106416050 A | 15-02-2017 |
| | | | EP | 3145746 A1 | 29-03-2017 |
| | | | KR | 20160148603 A | 26-12-2016 |
| | | | US | 2017072924 A1 | 16-03-2017 |
| | | | WO | 2015176756 A1 | 26-11-2015 |

EPO FORM P0459

For more details about this annex : see Official Journal of the European Patent Office, No. 12/82